Europäisches Patentamt

European Patent Office

Office européen des brevets

(19)

(11) Veröffentlichungsnummer : **0 489 719 B1**

(12)

# EUROPÄISCHE PATENTSCHRIFT

(45) Veröffentlichungstag der Patentschrift :
03.08.94 Patentblatt 94/31

(51) Int. Cl.$^5$ : **G03B 27/73**

(21) Anmeldenummer : **92104475.6**

(22) Anmeldetag : **10.10.88**

(54) Belichtungssteuerungsverfahren für ein fotografisches Farbkopiergerät.

(30) Priorität : **15.10.87 DE 3734911**
**12.09.88 CH 3394/88**

(43) Veröffentlichungstag der Anmeldung :
**10.06.92 Patentblatt 92/24**

(45) Bekanntmachung des Hinweises auf die
Patenterteilung :
**03.08.94 Patentblatt 94/31**

(84) Benannte Vertragsstaaten :
**CH DE FR GB IT LI**

(56) Entgegenhaltungen :
**EP-A- 0 128 348**
**DE-A- 2 632 715**
**FR-A- 2 451 049**
**FR-A- 2 583 893**
**US-A- 4 150 894**
**PATENT ABSTRACTS OF JAPAN vol. 6, no.**
**237 (P-157)(1115) 25. November 1982 & JP A**
**57136639**

(60) Veröffentlichungsnummer der früheren
Anmeldung nach Art. 76 EPü : **0 312 499**

(73) Patentinhaber : **GRETAG IMAGING AG**
**Althardstrasse 70**
**CH-8105 Regensdorf (CH)**

(72) Erfinder : **Ritter von Stein, Werner**
**Mispelweg 20**
**W-2000 Hamburg 71 (DE)**
Erfinder : **Kraft, Walter, Dr.**
**Appenzellerstrasse 57**
**CH-8049 Zürich (CH)**

(74) Vertreter : **Kleewein, Walter, Dr. et al**
**Patentabteilung**
**CIBA-GEIGY AG**
**Postfach**
**CH-4002 Basel (CH)**

## Beschreibung

Die Erfindung betrifft ein Verfahren zur Steuerung der Belichtung in einem fotografischen Farbkopiergerät gemäss dem Oberbegriff des Anspruchs 1.

Ein mit einer derartigen Belichtungssteuerung ausgestattetes Farbkopiergerät ist z.B. aus US-PS No. 4 589 766 bekannt. Bei dem dort beschriebenen Gerät wird der an sich bekannten Forderung (siehe z.B. R.W.G. Hunt, "The Reproduction of Colour", S. 284), dass die spektrale Empfindlichkeit (der Farbgang) der fotoelektrischen Abtasteinrichtung für die Kopiervorlage möglichst genau mit derjenigen bzw. denjenigen des Kopiermaterials übereinstimmen soll, mit Hilfe spezieller optischer Messfilter zu genügen versucht. Diese Methode ist aber zumindest insofern nachteilig, als u.a. wegen der erforderlichen extremen Präzision geeignete Messfilter nur sehr schwer herstellbar und entsprechend aufwendig sind. Ausserdem müssen bei veränderten Gegebenheiten, insbesondere bei Aenderungen der spektralen Empfindlichkeiten des Kopiermaterials jeweils neue, entsprechend angepasste Messfilter eingesetzt werden, was den Aufwand zusätzlich vergrössert.

Ein Problem bei der Bestimmung der erforderlichen Kopierlichtmengen besteht in der Tatsache, dass sich die spektralen Empfindlichkeiten verschiedener Kopiermaterialfabrikate recht erheblich unterscheiden. Dem Kopiermaterial angepasste Messwerte (Farbauszüge, Dichtewerte etc.) sind deshalb für ein und dieselbe Vorlage recht grossen Schwankungen unterworfen je nach dem, auf welches Kopiermaterialfabrikat sie gerade abgestimmt sind. Diese Tatsache wirkt sich natürlich sehr nachteilig aus, wenn es darum geht, die Kopiervorlage farblich zu analysieren um zum Beispiel Hauttöne, farbneutrale Flächen, Beleuchtungsfarbstiche, Dominanten etc. erkennen zu können und entsprechend zu berücksichtigen, wie dies z.B. bei den in den US-PS Nos. 4 092 067, 4 101 216 und 4 279 505 sowie in der Bedienungsanleitung (Operating Manual) Programm 7 und 8 zum Scanning Color Printer 3141 der Anmelderin beschriebenen Belichtungssteuerungsverfahren der Fall ist. Dieses Problem wird nun durch das in Patentanspruch 1 beschriebene erfindungsgemässe Verfahren behoben.

Weitere Varianten, Weiterbildungen und vorteilhafte Ausgestaltungen der Erfindung sind in den abhängigen Ansprüchen beschrieben.

Im folgenden wird die Erfindung anhand der Zeichnung näher erläutert. Es zeigen:

Fig. 1             eine Prinzipskizze eines Farbkopiergeräts zur Ausführüng der Erfindung,
Fig. 2             eine schematische Darstellung der Messanordnung des Farbkopiergeräts der Fig. 1 und
Fig. 3 bis 12      Diagramme zur Erläuterung des erfindungsgemässen Verfahrens.

Das Farbkopiergerät zur Ausführung der Erfindung kann - bis auf die noch zu erklärenden Unterschiede in der Messanordnung für die Kopiervorlagen -gleich aufgebaut sein wie herkömmliche Geräte dieser Art, beispielsweise etwa die weltweit eingesetzten Hochleistungsprinter Modelle Nos. 3139, 3140, 3141 oder 3142 der Anmelderin, welche u.a. in US-PS Nos. 4 092 067, 4 101 216 und 4 279 505 ausführlich beschrieben sind. Diese Druckschriften sowie die Bedienungsanleitungen zu den genannten Hochleistungsprintern werden daher ausdrücklich zum integrierten Bestandteil der vorliegenden Beschreibung erklärt.

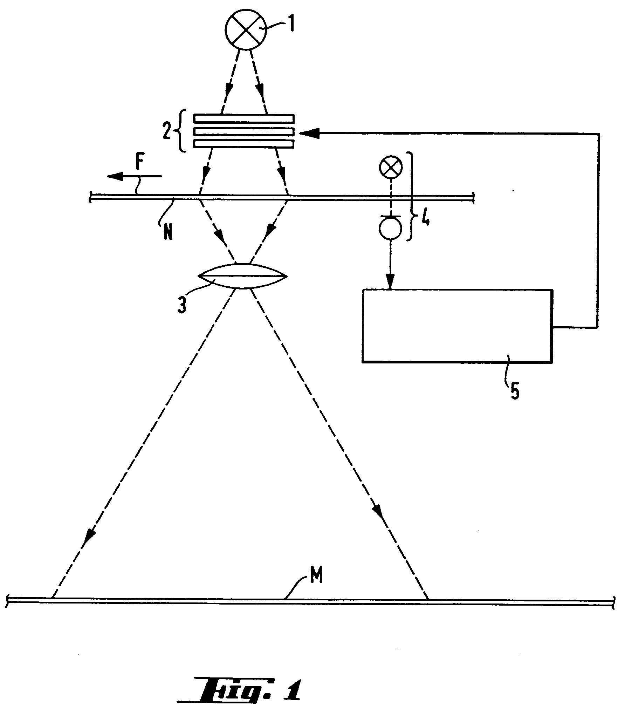

Fig. 1 zeigt schematisch die wesentlichsten, für das Verständnis notwendigen Komponenten eines solchen Farbkopiergeräts. Es umfasst eine Kopierlichtquelle 1, einen Satz servogesteuerter Farbverschlüsse 2, eine Abbildungsoptik 3, eine durch eine Messlichtquelle und einen Fotoempfänger symbolisch angedeutete fotoelektrische Messanordnung 4 und eine elektronische Belichtungssteuerung 5. Die mit von der Kopierlichtquelle 1 kommendem Licht beaufschlagte Kopiervorlage N wird mittels der Optik 3 auf lichtempfindliches Kopiermaterial P abgebildet, wobei die Kopierlichtmengen für die einzelnen Teilbelichtungen aufgrund einer vorgängigen bereichsweisen fotoelektrischen Ausmessung und Messwertanalyse der Kopiervorlage von der Belichtungssteuerung 5 ermittelt und über die Farbverschlüsse 2 gesteuert werden.

Bei den genannten Hochleistungs-Printern erfolgt die bereichsweise fotoelektrische Ausmessung der Kopiervorlage beispielsweise mit einer Auflösung von rund 100 Abtastbereichen (Punkten) pro Vorlage. In jedem Abtastbereich werden mittels geeigneter Messfilter die drei Farbauszugswerte für die Farben Rot, Blau und Grün bestimmt, die näherungsweise den Empfindlichkeiten des Kopiermaterials entsprechen. Dies 3 x ca. 100 Farbauszugswerte (üblicherweise in Form von Farbdichtewerten) werden dann nach verschiedenen Kriterien zur Bestimmung der Kopierlichtmengen ausgewertet.

Das Farbkopiegerät unterscheidet sich nun von den bekannten Printern in erster Linie durch die Art und Weise, wie die für die Belichtungssteuerung massgeblichen Farbauszugswerte der Kopiervorlage gewonnen werden. Die Abtastung erfolgt zwar nach wie vor bereichsweise, jedoch werden die Farbauszüge nicht mehr direkt mittels optischer Filter gemessen, sondern das von den einzelnen Abtastbereichen der Kopiervorlage stammende Messlicht wird spektrometrisch zerlegt und die Farbauszüge werden durch elektronische oder rechnerische, entsprechend den spektralen Empfindlichkeitsverläufen des Kopiermaterials gewichtete Integration bzw. Summation der gemessenen Spektralwerte bestimmt. Die so erhaltenen Farbauszugswerte werden dann wieder in üblicher Weise zur Belichtungssteuerung ausgewertet.

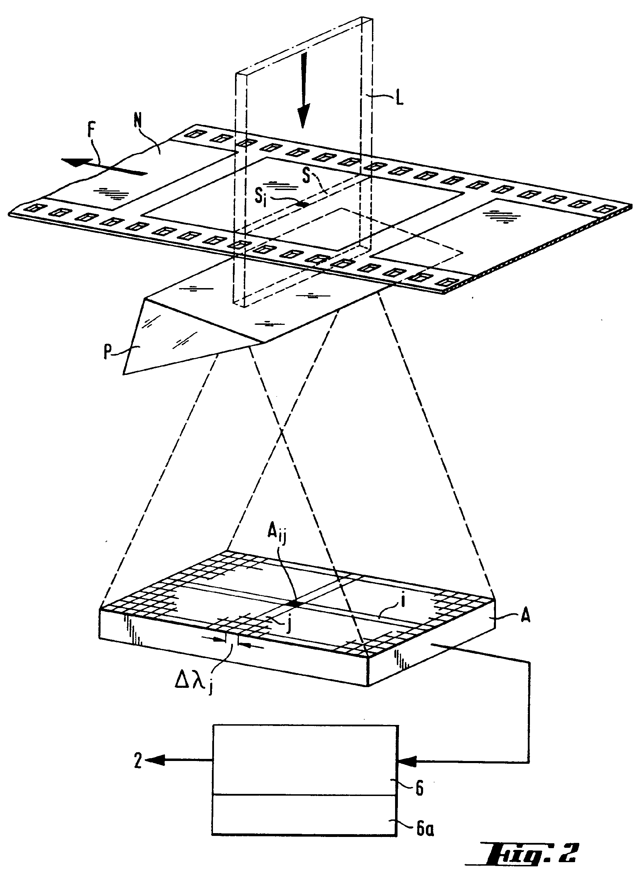

In Fig. 2 ist eine für diese Zwecke geeignete fotoelektrische Messanordnung schematisch dargestellt. Die sich schrittweise in Richtung des Pfeils F bewegende Kopiervorlage N wird hier streifenweise ausgemessen, wobei jeweils zwischen zwei Vorschubschritten ein sich quer zur Vorschubrichtung erstreckender Abtaststreifen S der Kopiervorlage mit Messlicht L beaufschlagt wird. Das durch die Kopiervorlage N hindurchgetretene Licht wird dann mittels eines sich parallel zum Abtaststreifen S erstreckenden Prismas P oder eines anderen geeigneten Elements, z.B. eines Beugungsgitters oder eines Spektralfilters, spektral aufgespalten und beaufschlagt ein zweidimensionales Feld A von lichtelektrischen Wandlern. (Der Abtaststreifen S wird dabei über nicht dargestellte optische Elemente in an sich bekannter Weise auf das Wandler-Feld A abgebildet.) In diesem Feld A, das vorzugsweise als CCD-Bildsensor (Charge Coupled Device, ladungsgekoppelte Bildsensor-Anordnung) ausgebildet ist, sind die einzelnen Fotosensoren $A_{ij}$ in parallelen Reihen i und dazu senkrechten Spalten j angeordnet. Die Spalten j verlaufen parallel zum Abtaststreifen S und teilen diesen gewissermassen in eine Vielzahl von kleinen, im wesentlichen punktförmigen Abtastbereichen $S_i$ auf, indem jeder Fotosensor $A_{ij}$ innerhalb einer Spalte j jeweils nur Licht aus einem (gedachten) Abtastbereich $S_i$ empfängt. Andererseits empfangen die in einer Reihe i liegenden Fotosensoren $A_{ij}$ zwar alle das Licht von jeweils ein und demselben Abtastbereich $S_i$, aufgrund der spektralen Aufspaltung des Messlichts jedoch jeweils aus einem anderen Wellenlängenbereich $\Delta\lambda_j$. Die Reihen i bestimmen also die örtliche Auflösung in Richtung quer zur Vorschubrichtung F der Kopiervorlage, die Spalten j definieren die spektrale Auflösung ($\Delta\lambda_j$). Die örtliche Auflösung in Vorschubrichtung ist durch die Grösse der Vorschubschritte gegeben, sie wird im allgemeinen etwa gleich gross gewählt wie in Richtung quer dazu.

Die Fotosensoren $A_{ij}$ einer Reihe i erzeugen also jeweils für einen bestimmten zugeordneten Abtastbereich $S_i$ der Kopiervorlage N einen Satz von elektrischen Signalen, die die spektrale Durchlässigkeit der Kopiervorlage in diesem Abtastbereich wiedergeben. Diese elektrischen Signale werden in herkömmlicher Weise, z.B. wie in US-PS Nos. 4 610 537 und 4 666 306 beschrieben, ausgelesen, verstärkt, bezüglich Dunkelsignal korrigiert und digitalisiert und einem Rechner 6 zugeführt. Aus messtechnischen Gründen (Dynamik-Kompression) erfolgt die Verstärkung vorzugsweise logarithmisch, so dass die dem Rechner zugeführten digitalen Signale nicht die spektralen Transmissionswerte sondern spektrale Dichtewerte der Abtastbereiche darstellen.

Gängige CCD-Bildsensoren enthalten etwa 500 x 500 Einzel-Fotosensoren. Damit ist theoretisch, wenn die örtliche Auflösung in beiden Richtungen gleich gross angenommen wird, eine Zerlegung der Kopiervorlage in etwa 250 000 Abtastbereiche bei einer spektralen Auflösung von besser als 1 nm möglich. Um den Aufwand in vertretbaren Grenzen zu halten, wird man sich in der Praxis aber durch entsprechend gröbere Vorschubschritte und eventuell Zusammenfassen der Signale benachbarter Fotosensoren auf eine örtliche Auflösung von etwa 1000-2000 Abtastbereichen pro Kopiervorlage und eine spektrale Auflösung von 5-40 nm, vorzugsweise etwa 10-20 nm beschränken. Dies gibt pro Kopiervorlage immerhin noch rund 9000-140 000 zu verarbeitende Messwerte.

Die fotoelektrische spektrale Abtastung der Kopiervorlage kann selbstverständlich auch mit anderen Mitteln als dargestellt realisiert sein. Beispielsweise kann anstelle eines zweidimensionalen Felds von Fotosensoren auch eine eindimensionale Fotosensoren-Zeile zum Einsatz kommen, wobei die örtliche Aufteilung der Kopiervorlage in einzelne Abtastbereiche z.B. durch entsprechende punktförmige Beleuchtung oder eine Abtastbewegung der Fotosensorenzeile erreicht werden kann. Im Extremfall kann auch mit einem einzigen Fotosensor gearbeitet werden, was allerdings wegen der grossen Zahl der dann sequentiell durchzuführenden Messungen zumindest bei Hochgeschwindigkeitsprintern unpraktikabel sein dürfte.

Im Rechner 6 werden die gemessenen spektralen Dichtewerte entlogarithmiert und ergeben so die gemessenen spektralen Transmissionswerte, die im Unterschied zu den tatsächlichen Transmissionswerten der Kopiervorlage noch den Farbgang der Abtastanordnung (Messlichtquelle + Optik) enthalten. Im folgenden sind die gemessenen diskreten spektralen Dichtewerte eines jeden Abtastbereichs mit $D_\lambda$ und die diskreten spektralen Transmissionswerte mit $T_\lambda$ bezeichnet. Die Gesamtheiten der Dichtewerte $D_\lambda$ und Transmissionswerte $T_\lambda$ sind analog mit $D(\lambda)$ bzw. $T(\lambda)$ bezeichnet.

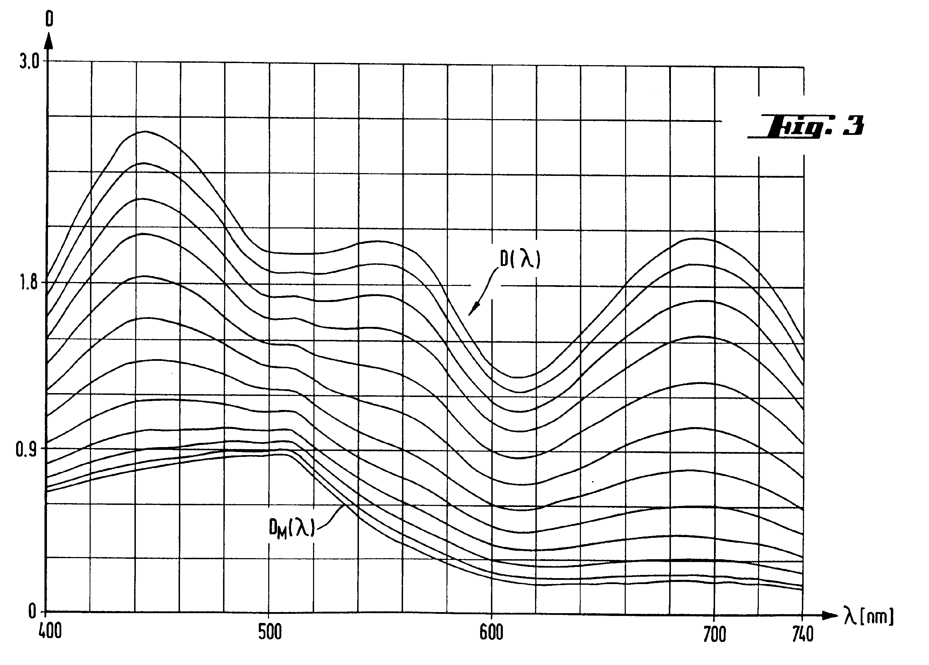

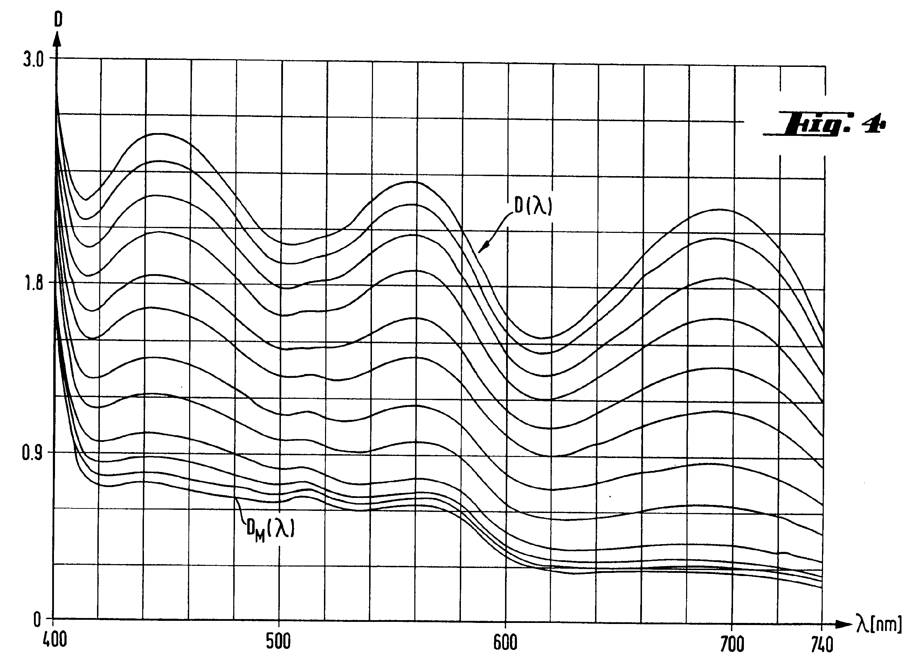

In den Fig. 3 und 4 sind die gemessenen spektralen Dichten $D(\lambda)$ von zwei verschiedenen Farbnegativfilmen dargestellt. Die einzelnen Mess-Spektren entsprechen dabei unterschiedlich belichteten Kopiervorlagen, die von einer neutralgrauen Farbvorlage aufgenommen wurden. Die unterste Kurve stellt das jeweilige Maskenspektrum $D_M(\lambda)$ des Farbnegativfilms dar. Der Wellenlängenbereich ($\lambda$-Achse) geht von $\lambda_{min} = 400$ nm bis $\lambda_{max} = 740$ nm mit einem Raster von 20 nm. Die Dichtewerte (D-Achse) gehen von 0 bis 3 (dimensionslos).

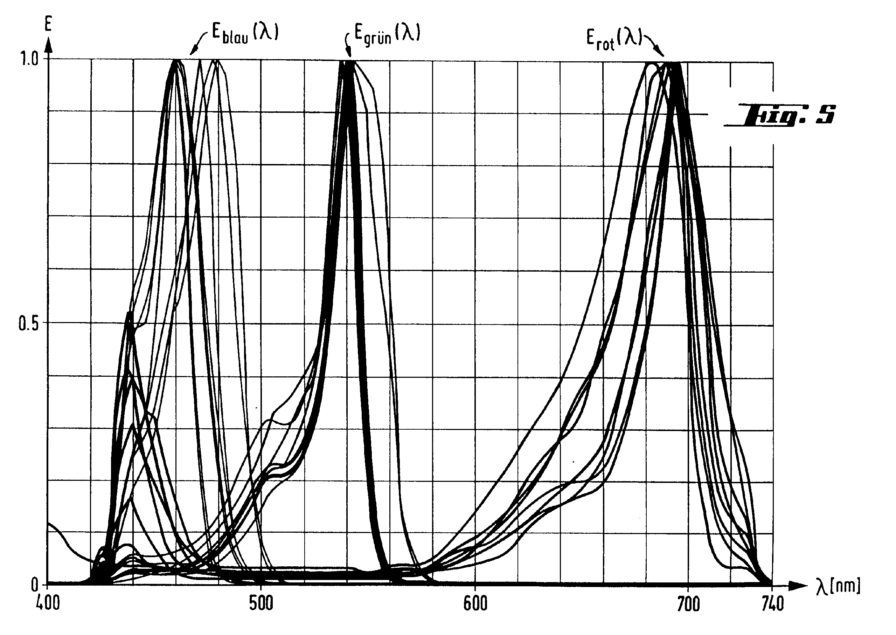

Fig. 5 zeigt die (normierten) spektralen Empfindlichkeitsverläufe $E_{blau}(\lambda)$, $E_{grün}(\lambda)$ und $E_{rot}(\lambda)$ verschiedener Kopiermaterialien (Fotopapiere) ebenfalls wieder im Wellenlängenbereich von 400-740 nm. Die Empfindlichkeitswerte (E-Achse) liegen zwischen 0 und 1. Wie man erkennt, weisen die Empfindlichkeitsverläufe steile Flanken auf, welche mittels optischer Filter mit der notwendigen Präzision nur sehr schwierig nachzubilden sind.

Gemäss einschlägiger Literatur, z.B. auch der schon genannten US-PS No. 4 589 766, ist das in den drei lichtempfindlichen Schichten des Kopiermaterials wirksame Licht $B_i$ durch die drei Integrale

$$B_i = \int_{\lambda_{min}}^{\lambda_{max}} E_i(\lambda) \cdot T^*(\lambda) \cdot I(\lambda) \, d\lambda \qquad (i = blau, grün, rot)$$

gegeben, worin $E_i(\lambda)$ und $T^*(\lambda)$ die spektralen Empfindlichkeiten der drei Schichten des Kopiermaterials bzw. die (tatsächliche) spektrale Transmission der Kopiervorlage bedeuten und $I(\lambda)$ den Farbgang des optischen Systems, insbesondere also auch den spektralen Intensitätsverlauf der Kopierlichtquelle angibt.

Um den Farbgang der fotoelektrischen Abtastanordnung 4 an die spektralen Empfindlichkeiten $E_i(\lambda)$ des Kopiermaterials anzupassen, werden nun gemäss der Erfindung nicht entsprechende optische Filter in den Messstrahlengang eingeschaltet, sondern die einzelnen gemessenen spektralen Transmissionswerte jedes Abtastbereichs werden mit den spektralen Empfindlichkeitswerten des Kopiermaterials und den Farbgängen der Messanordnung und der Projektionsanordnung (Kopierlichtquelle + Optik) gewichtet und über den gesamten Wellenlängenbereich $\lambda_{min} \ldots \lambda_{max}$ integriert bzw. summiert, sodass sich die drei Farbauszugswerte $F_i$ (i = blau, grün, rot) für jeden Abtastbereich also nach der folgenden Formel berechnen:

$$F_i = \int_{\lambda_{min}}^{\lambda_{max}} \frac{T(\lambda)}{Im(\lambda)} \cdot E_i(\lambda) \cdot Ik(\lambda) \cdot d\lambda$$

worin $T(\lambda)$ und $E_i(\lambda)$ die angegebenen Bedeutungen haben und $Im(\lambda)$ und $Ik(\lambda)$ die spektralen Farbgänge der Messanordnung und der Kopieranordnung sind. Die Parameter und Messwerte dieser Formel liegen in diskreter Form vor, sodass also in der Praxis aus dem Integral die folgende Summe wird:

$$F_i = \sum_{\lambda = \lambda_{min}}^{\lambda_{max}} T_\lambda \cdot \frac{Ik_\lambda}{Im_\lambda} \cdot E_{i_\lambda}$$

Der Farbgang $Im(\lambda)$ der optischen Abtastanordnung kann durch Messung ohne Kopiervorlage ermittelt werden, analog der Farbgang $Ik(\lambda)$ der Kopieranordnung. Die spektralen Empfindlichkeiten $E_i(\lambda)$ des Kopiermaterials sind entweder aus Datenblättern bekannt oder werden nach an sich bekannten Methoden bestimmt. Sämtliche diskreten Werte für $Im(\lambda)$, $Ik(\lambda)$ und $E_i(\lambda)$ sind in einem mit dem Rechner 6 zusammenarbeitenden Speicher 6a in tabellarischer Form abgelegt, wobei natürlich die je drei Einzelwerte $Ik_\lambda$, $Im_\lambda$ und $E_{i_\lambda}$ auch zu einem einzigen oder zwei Parametern zusammengefasst sein können. Vorzugsweise sind auch mehrere Sätze von Kopiermaterialempfindlichkeiten $E_i(\lambda)$ für unterschiedliches Kopiermaterial gespeichert. Vorzugsweise werden die Farbgänge $Ik(\lambda)$ und/oder $Im(\lambda)$ der Kopieranordnung bzw. Abtastanordnung von Zeit zu Zeit neu bestimmt und die aktuellen Werte abgespeichert. Aus rechentechnischen Gründen wird man die einzelnen Produkte in der obenstehenden Formel für $F_i$ mit Vorteil ausgehend von den (gespeicherten bzw. gemessenen) Grössen $\log E_{i_\lambda}$, $D_\lambda$ usw. berechnen.

Die drei Farbauszugswerte $F_{blau}$, $F_{grün}$ und $F_{rot}$ entsprechen dem Wesen nach den mit herkömmlichen Filtern gemessenen Transmissionen der jeweiligen Abtastbereiche. Diese Farbauszugswerte werden nun durch einfache Logarithmierung in entsprechende Farbdichten $D_b$, $D_g$ und $D_r$ (b = blau, g = grün, r = rot) umgerechnet und dann in üblicher Weise, beispielsweise etwa gemäss US-PS Nos. 4 092 067, 4 101 216 und 4 279 505 oder den schon erwähnten Bedienungsanleitungen zu den Hochleistungsprintern der Anmelderin zur Berechnung der Kopierlichtmengen herangezogen, wobei sie direkt an die Stelle der bisherigen densitometrisch ermittelten Dichtewerte treten.

Vorstehend ist das Verfahren im Zusammenhang mit Kopiervorlagen in Form von Negativen beschrieben. Es versteht sich jedoch, dass das Verfahren auch für Positiv-Kopiervorlagen geeignet ist, wobei im Falle von Aufsichtsvorlagen an die Stelle der spektralen Transmissionswerte sinngemäss spektrale Remissionswerte treten. Spektrale Transmissionswerte und Remissionswerte sind im folgenden allgmein als Spektralwerte bezeichnet.

Die Bewertung (Wichtung) der Spektralwerte mit den spektralen Empfindlichkeiten des Kopiermaterials erfolgt vorzugsweise rein rechnerisch. Selbstverständlich wäre aber auch eine elektronische Wichtung möglich, z.B. indem die Empfindlichkeit der fotoelektrischen Messanordnung entsprechend wellenlängenabhängig geregelt würde. Beispielsweise könnte dies durch entsprechende Einstellung des jeweiligen Verstärkungsfaktors beim Auslesen der einzelnen Fotosensoren $A_{ij}$ des CCD-Bildsensors realisiert sein.

Der wohl wichtigste Vorteil des Verfahrens liegt darin, dass aus der spektralen Messung der Vorlage rein rechnerisch (oder elektronisch), d.h. ohne die Notwendigkeit eines manuellen oder mechanisch gesteuerten Austausches der Messfilter, den spektralen Empfindlichkeiten des jeweiligen Kopiermaterials optimal angepasste Messwerte ermittelt werden können. Dem Kopiermaterial angepasste Messfilter, welche recht hohen Anforderungen bezüglich Transmissionsverlauf und Toleranzen genügen müssen und deshalb relativ teuer sind, können beim erfindungsgemässen Verfahren völlig entfallen. Dies fällt umsomehr ins Gewicht, als bisher mehrere solcher Filtersätze erforderlich waren, wenn, was häufig der Fall ist, Kopiermaterialien verschiedener Hersteller verwendet werden. Ausserdem mussten solche Filter für jedes neu auf den Markt kommende Kopiermaterial neu berechnet und bereitgestellt werden. Diese Schwierigkeiten entfallen bei der vorliegenden Erfindung, da hier die Anpassung rein numerisch aufgrund gespeicherter Empfindlichkeitskurven erfolgt. Selbstverständlich können dabei auch eventuell vorhandene spektrale Unterschiede des Mess- und Kopierlichts sowie des Mess- und Belichtungsstrahlengangs und natürlich auch die spektralen Empfindlichkeiten der verwendeten fotoelektrischen Wandler sehr einfach in die Rechnung miteinbezogen werden.

Ein weiterer wesentlicher Vorteil des Verfahrens bzw. der diesem zugrundeliegenden spektralen Messung der Kopiervorlagen besteht darin, dass ohne zusätzlichen gerätetechnischen Aufwand nebst den beschriebenen, dem Kopiermaterial angepassten Messwerten auch noch weitere, der Vorlage angepasste Messwerte ermittelt werden können, welche gemäss der Erfindung ebenfalls zur Steuerung der Belichtung ausgewertet werden können.

Dem Kopiermaterial angepasste Messwerte und der Kopiervorlage angepasste Messwerte dienen dabei unterschiedlichen Zwecken. Letztere dienen zur farblichen Analyse des Bildinhalts der Kopiervorlage (beispielsweise Erkennung farblich neutraler Gegenstände im Aufnahmemotiv), während aufgrund der ersteren die Belichtungsparameter (Kopierlichtmengen) so bestimmt werden, dass eine möglichst farbstichfreie Kopie ensteht (beispielsweise so, dass ein farblich neutrales Aufnahmemotiv in der Kopie ebenfalls farblich neutral erscheint). So ist es, wie bereits in EP-A-0 261 074 erwähnt, beim Kopieren von Diapositiven nützlich, die Kopiervorlage einerseits mit dem menschlichen Auge angepassten Empfindlichkeiten auszumessen, um eventuell vorhandene Farbfehler der Vorlage festzustellen, und andererseits für die Bestimmung der Kopierlichtmengen dem Kopiermaterial angepasste Messwerte zu verwenden, um eine möglichst farbgetreue Wiedergabe zu erzielen.

Bei Farbnegativen ermöglicht ein der Vorlage angepasster Messwertsatz eine bessere Farberkennung (z.B. Hautfarbe, neutrale Flächen usw.) und damit auch eine sicherere Erkennung von Farbdominanten. So erweist es sich gemäss einem weiteren Gedanken der Erfindung z.B. als vorteilhaft, bei der Bestimmung solcher vorlagenspezifischer Messgrössen vorwiegend Messwerte aus denjenigen Spektralbereichen heranzuziehen, in welchen die spektrale Absorption der Vorlagen-Farbstoffe (Film-Farbstoffe) Gelb, Cyan, Purpur ihr Maximum aufweist. Dabei empfiehlt es sich gemäss einem weiteren Gedanken der Erfindung die spektralen Messwerte (spektrale Dichtewerte $D_\lambda$) der einzelnen Abtastbereiche der Kopiervorlage vor ihrer Weiterverarbeitung bezüglich der spektralen Dichtewerte der Maske des Kopiermaterials zu normieren (d.h. die spektralen Dichtewerte der Maske abzuziehen), sodass die vorlagenmaterialspezifischen Eigenschaften der Maske nicht auf die motivspezifischen Messwerte einwirken. Im Vergleich zu einer Messung, welche nur die Eigenschaften des Kopiermaterials berücksichtigt und damit für ein und dieselbe Kopiervorlage je nach verwendetem Kopiermaterial erheblich unterschiedliche Resultate liefern kann, ergibt das erfindungsgemässe Verfahren genauere Informationen darüber, was die Kopiervorlage bei der Aufnahme des Bilds tatsächlich "gesehen" hat.

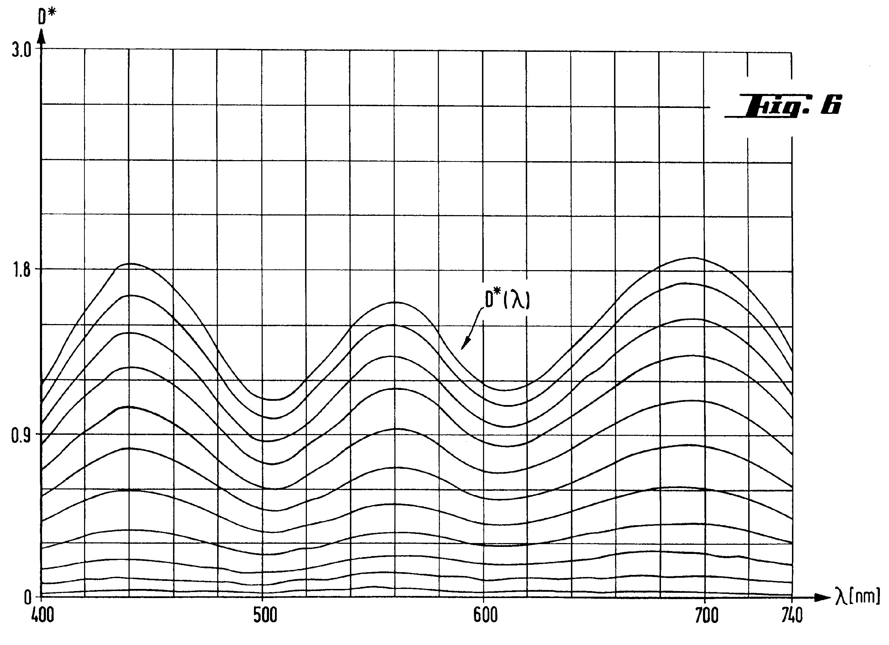

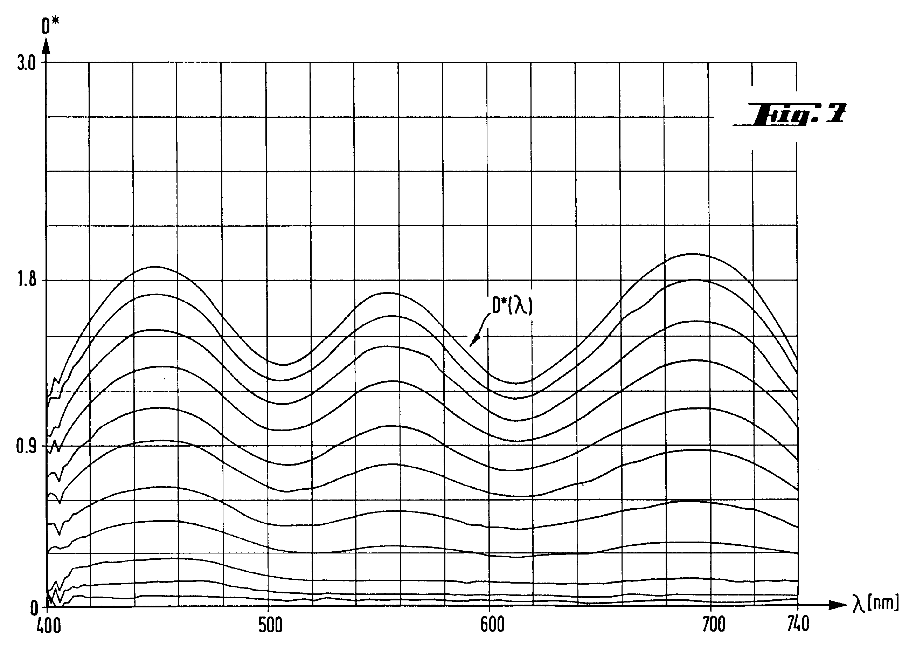

In Fig. 6 und 7 sind die auf der Grundlage der Dichtespektren $D(\lambda)$ der Fig. 3 und 4 errechneten, auf das jeweilige Maskenspektrum genormten Dichtespektren $D^*(\lambda)$ dargestellt. Es geht daraus deutlich hervor, dass durch diese Normierung eine wesentliche Angleichung der Spektren erzielt wird. Die normierten Spektren sagen mehr aus über den Bildinhalt, da sie weniger von vorlagenmaterialspezifischen Eigenschaften gestört sind.

Zur Normierung, d.h. Reduktion der gemessenen spektralen Dichtewerte $D_\lambda$ um die jeweiligen spektralen Dichtewerte $D_{M_\lambda}$ der Vorlagenmaske, kann selbstverständlich zusätzlich oder anstelle des Maskenspektrums $D_M(\lambda)$ auch das über die Abtastbereichdichtespektren einer grösseren Anzahl von Kopiervorlagen oder einer einzelnen geeigneten Test-Kopiervorlage berechnete mittlere Dichte- (oder analog auch Transmissions-)Spektrum verwendet werden.

Für die Ermittlung motivspezifischer Daten ist eine Normierung der Abtastbereichdichtespektren auf das Maskendichtespektrum oder ein gemitteltes Dichtespektrum auch dann von Vorteil, wenn nur ein einziger, dem Kopiermaterial angepasster Satz von Messdaten für die Belichtungssteuerung herangezogen wird.

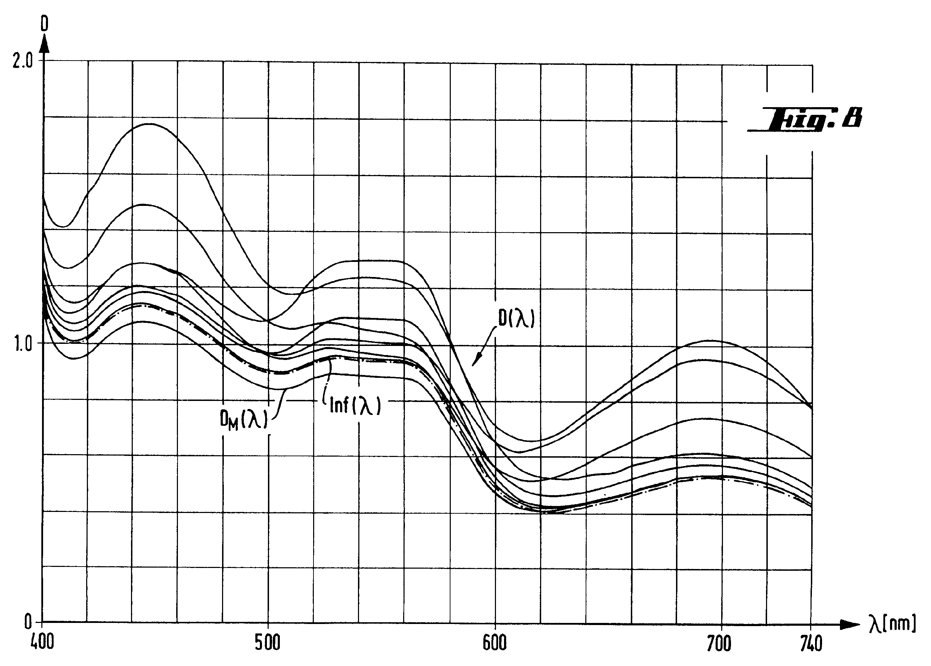

Für die Bestimmung des Maskenspektrums $D_M(\lambda)$ der Kopiervorlage können die Stege zwischen aufeinanderfolgenden Bildfeldern oder andere unbelichtete Bereiche der Kopiervorlage herangezogen werden. Ferner ist es auch möglich, das Maskenspektrum durch Schätzung aufgrund einer grösseren Anzahl von Abtastbereich-(Bildpunkt)-Spektren zu gewinnen, indem für jeden Wellenlängenbereich die minimale gemessene Dichte (oder gleichwertig die maximale Transmission) in den verschiedenen Bildpunktspektren bestimmt wird. Wie aus Fig. 8 beispielsweise hervorgeht, kann die so bestimmte, durch eine strichpunktierte Linie angedeutete untere Einhüllende Inf($\lambda$) bereits bei wenigen Einzelspektren D($\lambda$) recht gut mit dem zu Vergleichszwecken gemessenen Maskenspektrum $D_M(\lambda)$ (unterste Kurve) übereinstimmen.

Aufgrund der Spektralwerte einer oder vorzugsweise mehrerer Kopiervorlagen sowie vorzugsweise auch unbelichteter Vorlagenteile ist es ausserdem auch möglich, eine automatische Vorlagen-Fabrikat-Erkennung durchzuführen. Eine solche Fabrikaterkennung ist deshalb von Vorteil, weil damit auf eine spezielle Messeinrichtung zur Erkennung des üblichen Film-Codes (DX-Code) verzichtet werden kann. Insbesondere ist sie auch bei denjenigen Vorlagenformaten und -fabrikaten einsetzbar, die keinen solchen Code aufweisen. Sie ermöglicht es ferner, stark von der Norm abweichende Vorlagenfabrikate zu erkennen und anhand spezieller Korrektur- und Belichtungsparameter zu kopieren.

Es ist zudem messtechnisch vorteilhafter die wirkliche Maskendichte unabhängig vom Fabrikat zu erfassen, weil damit auch zusätzliche Effekte als Folge von Ueberlagerung des Filmmaterials, hoher Lagerungstemperatur, Entwicklungsfehler etc. mitberücksichtigt werden.

Für eine solche Fabrikat-Erkennung kann die Tatsache ausgenutzt werden, dass sich unterschiedliche Vorlagen-Fabrikate sowohl im spektralen Verlauf der Maskendichte als auch in der Lage und Breite der spektralen Absorptionskurven der drei Farbstoffe z.T. erheblich voneinander unterscheiden (ein Erkennungsverfahren aufgrund der unterschiedlichen Absorptionskurven ist z.B. in US-PS No. 4 422 752 beschrieben). Die Bestimmung der spektralen Maskendichte $D_M(\lambda)$ wurde bereits weiter vorne erläutert. Eine Schätzung des spektralen Verlaufs der drei Absorptionskurven erfolgt z.B. aufgrund einer grösseren Anzahl von Abtastbereichspektralwerten dadurch, dass für jeden Wellenlängenbereich die maximale gemessene Dichte (oder gleichwertig die minimale Transmission) in den verschiedenen Abtastbereichspektren bestimmt wird. Eine Normierung der so ermittelten spektralen Daten bezüglich des Vorlagenmaskenspektrums ist auch in diesem Fall von Vorteil.

Aufgrund der ermittelten Daten lässt sich eine Klassifizierung der Vorlagenfabrikate mittels der bekannten Verfahren der Muster- und Signalerkennung durchführen (vgl. z.B. Niemann: "Methoden der Mustererkennung", Frankfurt/Main, Akadem. Verlagsgesellschaft, 1974; Van Trees: "Detection, Estimation and Modulation Theory", New York, Wiley, 1968). Eine derartige Vorlagen-Fabrikaterkennung lässt sich mit herkömmlichen Messverfahren nicht oder zumindest nicht mit vergleichbarer Genauigkeit durchführen. Selbstverständlich ist das geschilderte erfindungsgemässe Verfahren auch zur Fabrikaterkennung bzw. -unterscheidung im Falle von Diapositiv-Kopiervorlagen von Vorteil.

Wie aus Fig. 5 ersichtlich zeichnen sich die spektralen Empfindlichkeiten $E_l(\lambda)$ des Kopiermaterials durch relativ steile Flanken aus. Dementsprechend müssen diese Kurven mit einer relativ hohen spektralen Auflösung (Grössenordnung 1-3 nm, vorzugsweise etwa 2 nm) aufgenommen und für die oben beschriebenen weiteren Berechnungen gespeichert werden. Im Vergleich dazu weisen, wie aus Fig. 3 und 4 hervorgeht, die spektralen Dichtewerte D($\lambda$) der Kopiervorlage einen relativ flachen Verlauf aus. Für die spektrale Ausmessung der Kopiervorlagen reicht deshalb eine wesentlich geringere spektrale Auflösung in der Grössenordnung von 5-40, vorzugsweise etwa 10-20 nm aus. Diese Tatsache kann gemäss einem weiteren Aspekt der Erfindung dazu ausgenutzt werden, den messtechnischen Aufwand für die spektrale Ausmessung der Kopiervorlagen relativ gering zu halten.

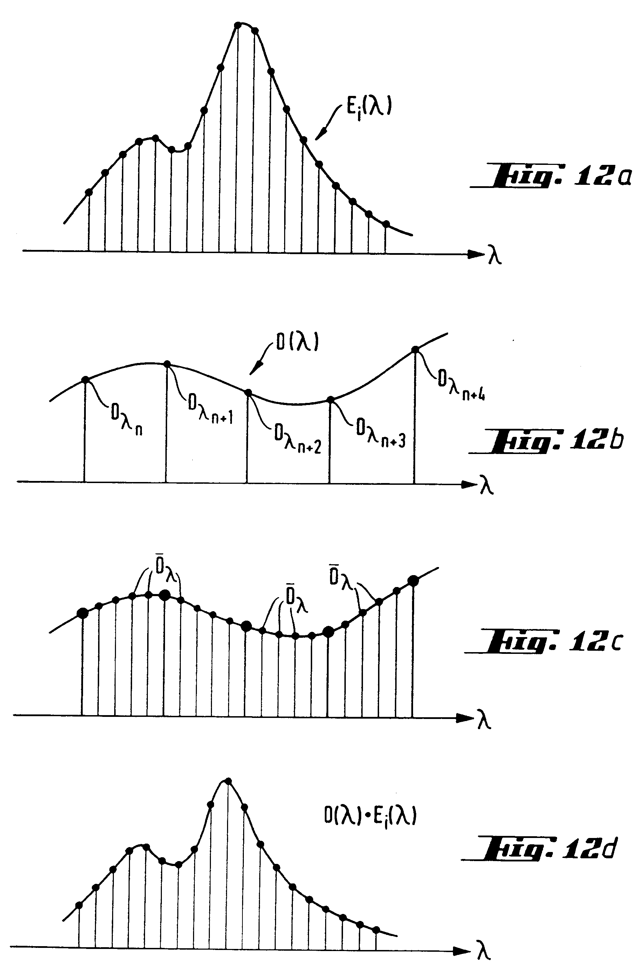

Wie schon beschrieben ist für die Bestimmung der Farbauszüge eine numerische Verknüpfung (Wichtung) zwischen den gespeicherten spektralen Empfindlichkeitsverläufen und den gemessenen Abtastbereichspektren erforderlich. Dazu müssen beide Datensätze mit derselben spektralen Auflösung vorliegen. Gemäss einem weiteren wichtigen Aspekt der Erfindung werden dazu aus den mit niedrigerer Auflösung gemessenen Abtastbereichspektralwerten $D_\lambda$ (Fig. 12b) durch ein geeignetes Interpolationsverfahren (z.B. kubisches Spline-Verfahren) Zwischenwerte $\overline{D}_\lambda$ errechnet (die Stützstellendichte wird erhöht, Fig. 12c), sodass die gemessenen Spektralwerte $D_\lambda$ zusammen mit den interpolierten Zwischenwerten $\overline{D}_\lambda$ dieselbe spektrale Auflösung aufweisen wie die gespeicherten Empfindlichkeitsverläufe $\underline{E}_i(\lambda)$ (Fig. 12a). In Fig. 12d schliesslich ist das Resultat der Verknüpfung der Mess- und Zwischenwerte $D_\lambda$ und $\overline{D}_\lambda$ aus Fig. 12c mit den gespeicherten Werten $E_i(\lambda)$ der Fig. 12a dargestellt.

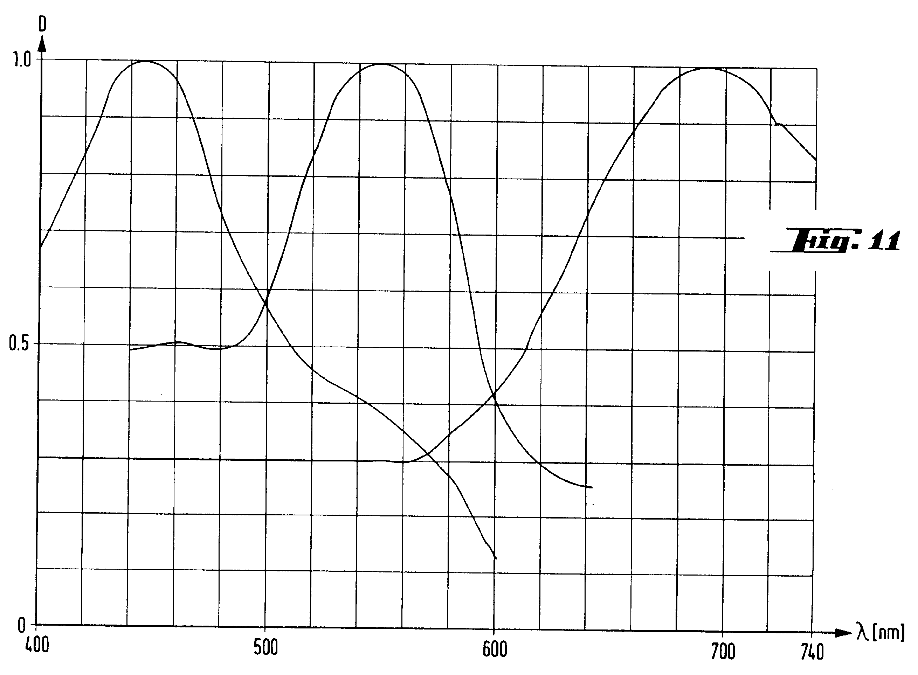

Wie aus Fig. 5 hervorgeht, bestehen zwischen den spektralen Empfindlichkeiten verschiedener Kopiermaterialien recht grosse Unterschiede. Dem Kopiermaterial angepasste Messwerte (Farbauszüge) sind deshalb für ein und dieselbe Vorlage recht grossen Schwankungen unterworfen, falls von einem Kopiermaterial auf ein anderes übergewechselt wird. Diese Tatsache wirkt sich natürlich nachteilig aus, wenn es darum geht, die Kopiervorlage farblich zu analysieren (Erkennen von Hauttönen und farbneutralen Flächen, Erkennen von Beleuchtungsfarbstichen, Dominanten etc.). Für die farbliche Analyse der Kopiervorlagen werden daher gemäss einem weiteren Aspekt der Erfindung konstante, nicht den Kopiermaterialempfindlichkeiten sondern den spektralen Absorptionskurven der Kopiervorlagen angepasste Messwerte verwendet. Dabei erweist es sich als günstig, dass die Absorptionskurven der üblichen Kopiervorlagen ein relativ flaches Maximum aufweisen (Fig. 11), dessen spektrale Lage ausserdem relativ wenig variiert zwischen verschiedenen Fabrikaten (vgl. Fig. 6 und 7). Damit können motivspezifische Messwerte (weitgehend) unabhängig vom Vorlagenfabrikat einheitlich ermittelt werden, indem die spektralen Dichtewerte $D_\lambda$ (und die interpolierten Zwischenwerte) mit schmalbandigen Empfindlichkeiten (Bandbreite ca. 10 nm), die ihr Maximum in der Umgebung von 450 nm (für den Gelbfarbstoff), 550 nm (für den Purpurfarbstoff) und 695 nm (für den Cyanfarbstoff) aufweisen, gewichtet werden. Werden diese Empfindlichkeiten mit $G_i(\lambda)$ bezeichnet (i = gelb, purpur, cyan), so ergeben sich die vorlagen-angepassten Messwerte $DV_i$ aus den gemessenen (und gegebenenfalls interpolierten) spektralen Dichtewerten $D_\lambda$ und den spektralen Dichtewerten $D_{M_\lambda}$ der Maske für jeden einzelnen Abtastbereich nach der Formel

$$DV_i = \sum_{\lambda_{min}}^{\lambda_{max}} G_{i_\lambda} \cdot \left( D_\lambda - D_{M_\lambda} \right) \quad (i = gelb, purpur, cyan)$$

Gemäss dieser besonderen Ausgestaltung des erfindungsgemässen Verfahrens werden also aus den spektralen Messwerten für jeden Abtastbereich der Kopiervorlage zwei Sätze von Daten erzeugt, und zwar einmal die drei dem Kopiermaterial angepassten Farbauszüge $F_i$ bzw. die entsprechenden Farbdichtewerte $D_i$ und einmal die drei der Kopiervorlage angepassten Farbdichtewerte $DV_i$. Die Kopiermaterial-angepassten Farbdichten $D_i$ werden zur Steuerung der Belichtung so benutzt, dass farblich neutrale Vorlagenflächen wieder farblich neutrale Kopien ergeben, während die Vorlagen-angepassten Farbdichten $DV_i$ zur Analyse des Vorlageninhalts und der darauf basierenden Korrektur der Belichtung herangezogen werden. Dies kann z.B. grundsätzlich analog erfolgen wie bei den in den US-PS Nos. 4 092 067, 4 101 216 und 4 279 505 und in den Bedienungsanleitungen der genannten Hochleistungsprinter der Anmelderin beschriebenen Verfahren, wo die Messwerte (Farbdichtewerte $D_i$) der einzelnen Abtastbereiche (Bildpunkte) unterschiedlich (z.B. mit unterschiedlichem Gewicht) in die Berechnung der Kopierlichtmengen eingehen je nach dem, ob die betreffenden Bildpunkte gewisse Eigenschaften, z.B. ein farbliches Ungleichgewicht (Dominanten) etc. aufweisen oder nicht. Bei den bekannten Verfahren erfolgt die Untersuchung der Bildpunkte auf gewisse Kriterien anhand derselben kopiermaterialangepassten Messwerte wie die der Berechnung der Kopierlichtmengen zugrundeliegenden Messwerte, beim erfindungsgemässen Verfahren dagegen aufgrund der speziellen kopiervorlageangepassten Messwerte. Mit anderen Worten, die Festlegung, welche Bildpunkte in welcher Weise in die Berechnung der Kopierlichtmengen eingehen sollen, erfolgt anhand der kopiervorlagenangepassten Farbdichtewerte $DV_i$, die eigentliche Berechnung der Kopierlichtmengen aber aufgrund der kopiermaterialangepassten Farbauszüge $F_i$ bzw. entsprechenden Farbdichten $D_i$.

Das vorstehend skizzierte erfindungsgemässe Prinzip, die Belichtungssteuerung auf der Grundlage sowohl eines dem Kopiermaterial angepassten Datensatzes als auch eines separaten, dem Kopiervorlagenmaterial angepassten Datensatzes vorzunehmen, ist natürlich nicht auf eine spektralfotometrische Abtastung der Kopiervorlagen beschränkt, obwohl diese Messmethode aus den angeführten Gründen natürlich am zweckmässigsten und vorteilhaftesten erscheint. Selbstverständlich können die beiden Datensätze (Farbauszüge $F_i$ bzw. entsprechende Farbdichten $D_i$ und separate Farbauszüge bzw. Farbdichten $DV_i$) auch auf konventio-

nelle Art z.B. durch entsprechende optische Filterung ermittelt werden.

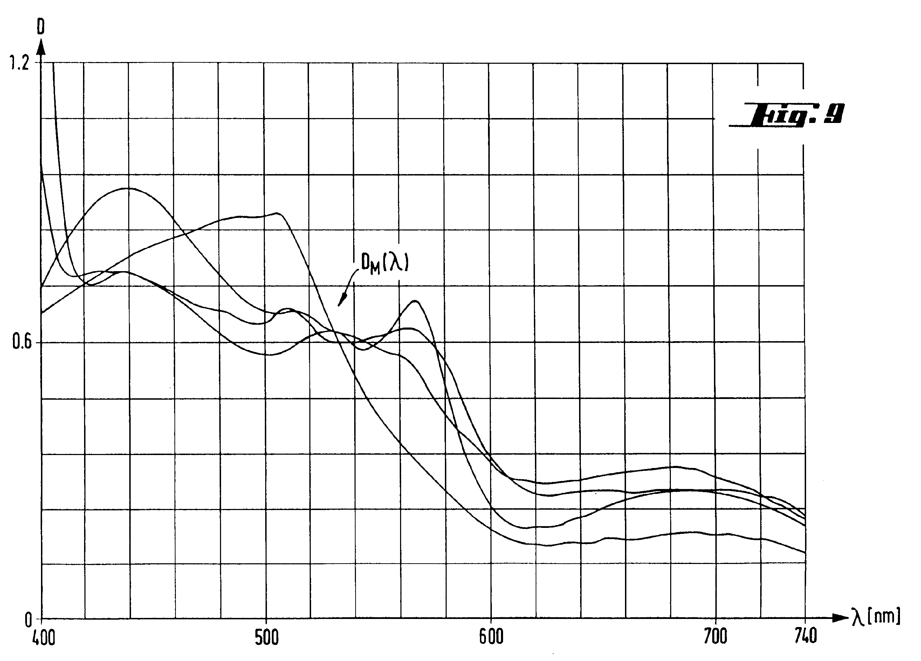

Kopiervorlagen, die sich in ihrem Kopierverhalten deutlich vom Durchschnitt unterscheiden, zeichnen sich meist auch durch deutliche Unterschiede des Maskenspektrums aus. In Fig. 9 sind die (gemessenen) Masken(dichte)spektren $D_M(\lambda)$ fünf verschiedener Kopiervorlagenfabrikate (Negativ-Filme) dargestellt. Es ist daraus klar ersichtlich, dass bereits mit einfachen Verfahren eine recht gute Unterscheidung bzw. Erkennung bestimmter Fabrikate möglich ist. So kann man z.B. für die Erkennung die Abweichung zwischen gespeicherten Referenzmaskenspektren und den aktuell gemessenen (oder gemäss Obigem geschätzten) Maskenspektren berechnen. Als geeignete zusätzliche Merkmale können auch die Steilheiten der Maskenspektren bei gewissen Wellenlängen (z.B. 400, 530 und 580 nm) verwendet werden.

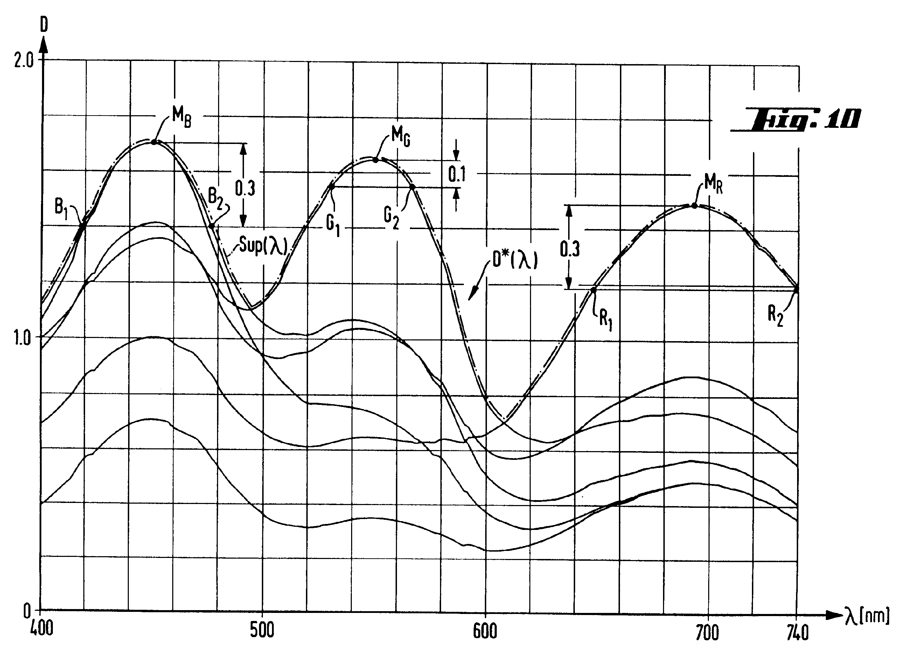

Fig. 10 zeigt, wie man durch Bestimmung der durch eine strichpunktierte Linie angedeuteten oberen Einhüllenden $Sup(\lambda)$ über eine Menge gemessener, auf das jeweilige Maskenspektrum normierter Dichtespektren $D*(\lambda)$, d.h. die Gesamtheit der jeweiligen maximalen gemessenen und normierten spektralen Dichtewerte $D_\lambda^*$, zu einer Kurve gelangt, welche Aufschluss über die Eigenschaften der tatsächlichen Absorptionskurven der drei Farbstoffe der Kopiervorlage liefert. Die spektralen Lagen (Wellenlängen) der z.B. um 0,3 Dichteeinheiten unter dem jeweiligen Maximum $M_R$, $M_B$ im Rot- und im Blaubereich liegenden Punkte $R_1$, $R_2$, $B_1$, $B_2$ sowie der z.B. um 0,1 Dichteeinheiten unter dem Maximum $M_G$ im Grünbereich liegenden Punkte $G_1$, $G_2$ dieser Kurve sowie die Dichtewerte (Höhe) der drei Maxima $M_R$, $M_G$, $M_B$ selbst können zusätzlich zum Maskenspektrum als Merkmale zur Filmsorten-Erkennung verwendet werden. In Fig. 11 sind zum Vergleich die tatsächlichen (auf 1 genormten) Absorptionskurven derselben Kopiervorlage dargestellt. Wie man erkennt, stimmen die obere Einhüllende und die tatsächlichen Kurven sehr gut überein.

Die Erkennung bzw. Unterscheidung unterschiedlicher Vorlagenfabrikate kann dann in üblicher Weise, beispielsweise wie in US-PS No. 4 150 894 und den darin angeführten Literaturstellen beschrieben, zur weiteren Beeinflussung der Belichtungssteuerung herangezogen werden.

## Patentansprüche

1. Verfahren zur Steuerung der Belichtung in einem fotografischen Farbkopiergerät unter bereichsweiser fotoelektrischer Abtastung einer Kopiervorlage, wobei für jeden Abtastbereich der Kopiervorlage den spektralen Empfindlichkeitsverläufen des Kopiermaterials angepasste Farbauszugswerte bestimmt und aus diesen unter Vergleich mit entsprechenden Referenzwerten die erforderlichen Kopierlichtmengen ermittelt werden und wobei ferner die farbliche Zusammensetzung der einzelnen Abtastbereiche der Kopiervorlage nach vorgegebenen Kriterien analysiert wird und aufgrund dieser Analyse festgelegt wird, ob und in welcher Weise die Farbauszugswerte der betreffenden Abtastbereiche der Kopiervorlage bei der Ermittlung der Kopierlichtmengen berücksichtigt werden, dadurch gekennzeichnet, dass für die einzelnen Abtastbereiche der Kopiervorlage zusätzlich zu den dem Kopiermaterial angepassten Farbauszugswerten separate, den spektralen Absorptionsverläufen des Kopiervorlagenmaterials angepasste Farbauszugswerte bestimmt werden und die Analyse der farblichen Zusammensetzung der Abtastbereiche der Kopiervorlage aufgrund dieser dem Kopiervorlagenmaterial angepassten separaten Farbauszugswerte erfolgt.

2. Verfahren nach Anspruch 1, dadurch gekennzeichnet, dass zur Bestimmung der separaten Farbauszugswerte die Abtastbereiche der Vorlage in denjenigen Spektralbereichen fotoelektrisch ausgemessen werden, in denen die spektrale Absorption der Farbstoffe des Kopiervorlagenmaterials ihr Maximum aufweist.

3. Verfahren nach Anspruch 1 oder 2, dadurch gekennzeichnet, dass die Transmission bzw. Dichte der Maske des Kopiervorlagenmaterials bestimmt wird und bei der Bestimmung der separaten Farbauszugswerte die Messwerte auf die Transmission bzw. Dichte der Maske normiert werden, indem die Messwerte aus den genannten Spektralbereichen durch die Transmission der Maske in diesen Spektralbereichen dividiert bzw. um die Dichte der Maske in diesen Spektralbereichen reduziert werden.

4. Verfahren nach Anspruch 2, dadurch gekennzeichnet, dass die genannten Spektralbereiche bei etwa 450 nm, 550 nm und 695 nm mit einer jeweiligen Bandbreite von etwa 10 nm liegen.

5. Verfahren nach einem der Ansprüche 1 bis 4, dadurch gekennzeichnet, dass die einzelnen Abtastbereiche der Kopiervorlage spektrometrisch abgetastet werden und die dem Kopiermaterial angepassten Farbauszugswerte und/oder die dem Kopiervorlagenmaterial angepassten separaten Farbauszugswerte durch elektronische oder rechnerische Filterung der bei der spektrometrischen Abtastung erhaltenen Spektralwerte bestimmt werden.

6. Verfahren nach Anspruch 5, dadurch gekennzeichnet, dass die Spektralwerte, insbesondere diejenigen der Maske bei Negativ-Filmen zur Erkennung des Kopiervorlagenfabrikats ausgewertet werden.

7. Verfahren nach Anspruch 6, dadurch gekennzeichnet, dass die Spektralwerte auf die spektrale Transmission oder Dichte der Maske des Kopiervorlagenmaterials normiert werden und die Auswertung zur Erkennung des Kopiervorlagenmaterials auf der Grundlage der normierten Spektralwerte erfolgt.

8. Verfahren nach Anspruch 5, dadurch gekennzeichnet, dass die Messung der Spektralwerte in einem gröberen Wellenlängen-Raster als eine Bewertung und Integration der Spektralwerte erfolgt, wobei nicht gemessene Zwischen-Spektralwerte interpoliert werden.

9. Verfahren nach einem der Ansprüche 1 bis 3 oder nach Anspruch 5, dadurch gekennzeichnet, dass bei der fotoelektrischen Abtastung der Kopiervorlage jeweils ein eine Vielzahl von Abtastbereichen umfassender Streifen der Kopiervorlage auf einmal ausgemessen wird, wobei das gesamte aus diesem Streifen stammende Messlicht spektral zerlegt und der Streifen so auf ein Feld von in Zeilen und Spalten angeordneten Fotosensoren abgebildet wird, dass jeweils zu einer Zeile gehörende Fotosensoren mit Licht von ein und demselben Abtastbereich aber unterschiedlicher Spektralbereiche und jeweils zu einer Spalte gehörende Fotosensoren mit Licht von unterschiedlichen Abtastbereichen aber desselben Spektralbereichs beaufschlagt werden.

## Claims

1. A process for controlling the exposure in a photographic colour copying apparatus, comprising photo-electrically scanning a copying original by regions and determining for every scanning region of the copying original colour extract values adapted to the spectral sensitivity variation of the copying material and determining the necessary amounts of copying light from said colour extract values by comparison with corresponding reference values, and furthermore analysing the colour composition of the individual scanning regions of the copying original according to given criteria and determining, on the basis of said analysis, whether and in what manner the colour extract values of the relevant scanning regions of the copying original are taken into account in the determination of the amounts of copying light, wherein there are determined for the individual scanning regions of the copying original, in addition to the colour extract values adapted to the copying material, separate colour extract values adapted to the spectral absorption variation of the copying original material, and the analysis of the colour composition of the scanning regions of the copying original is carried out on the basis of said separate colour extract values adapted to the copying original material.

2. A process according to claim 1, wherein, in order to determine the separate colour extract values, the scanning regions of the original are photoelectrically measured in those spectral ranges in which the spectral absorption of the colorants of the copying original material have their maximum.

3. A process according to either claim 1 or claim 2, wherein the transmission or density of the mask of the copying original material is determined and, in the determination of the separate colour extract values, the measured values are standardised on the transmission or density of the mask by dividing the values measured in the said spectral ranges by the transmission of the mask in those spectral ranges or reducing said measured values by the density of the mask in those spectral ranges.

4. A process according to claim 2, wherein said spectral ranges are located at approximately 450 nm, 550 nm and 695 nm, each with a band width of approximately 10 nm.

5. A process according to any one of claims 1 to 4, wherein the individual scanning regions of the copying original are scanned spectrometrically and the colour extract values adapted to the copying material and/or the separate colour extract values adapted to the copying original material are determined by electronic or computer filtering of the spectral values obtained in the spectrometric scanning.

6. A process according to claim 5, wherein the spectral values, especially those of the mask in the case of negative films, are evaluated for recognising the manufacture of the copying original.

7. A process according to claim 6, wherein the spectral values are standardised on the spectral transmission or density of the mask of the copying original material, and the evaluation for recognising the copying original material is carried out on the basis of the standardised spectral values.

8. A process according to claim 5, wherein the measurement of the spectral values is carried out in a coarser wavelength grid than is used in an evaluation and integration of the spectral values, with unmeasured intermediate spectral values being interpolated.

9. A process according to any one of claims 1 to 3 or according to claim 5, wherein, in the photoelectric scanning of the copying original, a strip of the copying material, which strip comprises a plurality of scanning regions, is in each case measured all at once, the entire measuring light originating in said strip being spectrally decomposed and the strip being so projected onto a field of photosensors arranged in rows and columns that photosensors each belonging to a row are exposed to light from the same scanning region but having different spectral ranges and photosensors each belonging to a column are exposed to light from different scanning regions but having the same spectral range.

**Revendications**

1. Procédé pour commander l'exposition dans un appareil photographique à copier en couleurs, comprenant l'exploration photoélectrique zone par zone d'un original à copier, procédé dans lequel, pour chaque zone d'exploration de l'original, sont déterminées des valeurs d'extraits de couleur ou valeurs des composantes trichromatiques adaptées aux allures de la sensibilité spectrale du matériau de tirage et les quantités de lumière de tirage nécessaires sont déterminées à partir de ces valeurs, avec comparaison à des valeurs de référence correspondantes, et dans lequel, en outre, la composition chromatique des différentes zones d'exploration de l'original est analysée selon des critères préfixés et il est établi, d'après cette analyse, si et de quelle manière il est tenu compte des valeurs des composantes trichromatiques des zones d'exploration en question de l'original dans la détermination des quantités de lumière de tirage, caractérisé en ce que, en plus des valeurs des composantes trichromatiques adaptées au matériau de tirage, des valeurs des composantes trichromatiques adaptées aux allures de l'absorption spectrale du matériau de l'original sont déterminées pour les différentes zones d'exploration de l'original, et l'analyse de la composition chromatique des zones d'exploration de l'original s'effectue sur la base de ces valeurs des composantes trichromatiques séparées adaptées au matériau de l'original.

2. Procédé selon la revendication 1, caractérisé en ce que, pour la détermination des valeurs des composantes trichromatiques séparées, les zones d'exploration de l'original sont mesurées, par voie photoélectrique, dans les domaines spectraux dans lesquels l'absorption spectrale des colorants du matériau de l'original présente son maximum.

3. Procédé selon la revendication 1 ou 2, caractérisé en ce que la transmission ou la densité du masque du matériau de l'original est déterminée et, lors de la détermination des valeurs des composantes trichromatiques séparées, les valeurs mesurées sont normalisées par rapport à la transmission ou la densité du masque, du fait que les valeurs mesurées provenant desdits domaines spectraux sont divisées par la transmission du masque dans ces domaines spectraux ou sont diminuées de la densité du masque dans ces domaines spectraux.

4. Procédé selon la revendication 2, caractérisé en ce que les domaines spectraux mentionnés se trouvent à environ 450 nm, 550 nm et 695 nm avec chaque fois une largeur de bande d'environ 10 nm.

5. Procédé selon une des revendications 1 à 4, caractérisé en ce que les différentes zones d'exploration de l'original sont explorées par voie spectrométrique et les valeurs des composantes trichromatiques adaptées au matériau de tirage et/ou les valeurs des composantes trichromatiques séparées, adaptées au matériau de l'original, sont déterminées par filtrage électronique ou arithmétique des valeurs spectrales obtenues lors de l'exploration spectrométrique.

6. Procédé selon la revendication 5, caractérisé en ce que les valeurs spectrales, en particulier celles du masque dans le cas de films négatifs, sont exploitées en vue de la réconnaissance de la fabrication (origine du produit) de l'original.

7. Procédé selon la revendication 6, caractérisé en ce que les valeurs spectrales sont normalisées sur la transmission ou la densité spectrale du masque du matériau de l'original, et l'exploitation en vue de reconnaître le matérieu de l'original s'effectue sur la base des valeurs spectrales normalisées.

8. Procédé selon la revendication 5, caractérisé en ce que la mesure des valeurs spectrales s'effectue avec une graduation en longueur d'onde plus grossière qu'une pondération et une intégration des valeurs spectrales, avec interpolation de valeurs spectrales intermédiaires non mesurées.

9. Procédé selon une des revendications 1 à 3 ou selon la revendication 5, caractérisé en ce que, lors de l'exploration photoélectrique de l'original, une bande de l'original comprenant un grand nombre de zones d'exploration est mesurée en une seule fois, avec décomposition spectrale de l'ensemble de la lumière de mesure provenant de cette bande et reproduction de la bande sur une mosaïque de photocapteurs disposés en lignes et en colonnes, de manière que des photocapteurs faisant partie d'une ligne soient éclairés chaque fois avec de la lumière provenant d'une seule et même zone d'exploration, mais de domaines spectraux différents, et que des photocapteurs faisant partie d'une colonne reçoivent chaque fois de la lumière provenant de différentes zones d'exploration, mais du même domaine spectral.

**Fig. 1**

_Fig: 2_

Fig. 3

EP 0 489 719 B1

Fig: 4

EP 0 489 719 B1

Fig. 5

Fig. 6

EP 0 489 719 B1

Fig. 1

Fig. 8

Fig. 9

$D_M(\lambda)$

EP 0 489 719 B1

Fig. 10

EP 0 489 719 B1

Fig. 11

$E_i(\lambda)$

*Fig. 12a*

$O(\lambda)$

$O_{\lambda_n}$   $O_{\lambda_{n+1}}$   $O_{\lambda_{n+2}}$   $O_{\lambda_{n+3}}$   $O_{\lambda_{n+4}}$

*Fig. 12b*

$\bar{O}_\lambda$   $\bar{O}_\lambda$   $\bar{O}_\lambda$

*Fig. 12c*

$O(\lambda)\cdot E_i(\lambda)$

*Fig. 12d*